# EUROPEAN PATENT SPECIFICATION

(11) **EP 3 429 284 B1**
(45) Date of publication and mention of the grant of the patent: **23.08.2023**
(21) Application number: 17181144.1
(22) Date of filing: 13.07.2017
(51) Int. Cl.: H04W 56/00

(54) **METHOD FOR DETERMINING A DELAY TIME BETWEEN TWO WIRELESS COMMUNICATION ENTITIES, TIME STAMP DEVICE AS WELL AS SYSTEM**
VERFAHREN ZUR BESTIMMUNG EINER VERZÖGERUNGSZEIT ZWISCHEN ZWEI DRAHTLOSKOMMUNIKATIONSEINHEITEN, ZEITSTEMPELVORRICHTUNG SOWIE SYSTEM
PROCÉDÉ POUR DÉTERMINER UN DURÉE DE RETARD ENTRE DEUX ENTITÉS DE COMMUNICATION SANS FIL, DISPOSITIF D'ESTAMPILLE TEMPORELLE AINSI QUE SYSTÈME

(43) Date of publication of application: 16.01.2019
(73) Proprietor: Rohde & Schwarz GmbH & Co. KG, 81671 München (DE)
(72) Inventor: Kehlenbach, Werner, 84405 Dorfen (DE); Eichler, Taro, 80638 München (DE)
(74) Representative: Prinz & Partner mbB

(56) References cited:
- WO-A1-01/01613
- US-A1- 2008 247 352
- US-A1- 2011 216 660
- YONGHWAN BANG ET AL: "Wireless network synchronization for multichannel multimedia services", ADVANCED COMMUNICATION TECHNOLOGY, 2009. ICACT 2009. 11TH INTERNATIONAL CONFERENCE ON, GIRI, PISCATAWAY, NJ, USA, 15 February 2009 (2009-02-15), pages 1073-1077, XP031445859, ISBN: 978-89-5519-138-7

## Description

The present invention relates to a method for determining a delay time between two wireless communication entities, a time stamp device for a system for determining a delay time between two wireless communication entities as well as a system for determining a delay time between two wireless communication entities.

Wireless communication systems are widely used in several technical fields in order to provide a communication between different wireless communication entities in a simple manner. For instance, mobile communication devices such as smartphones, mobile phones or similar devices use wireless communication technologies to communicate with a base station which might provide data while being connected to a data source. Alternatively, the base station may be connected to a data sink while receiving data that is transmitted from the user equipment (UE), for instance the mobile phone or the smartphone.

Furthermore, modern automobiles, such as cars configured for (at least partly) autonomous driving, communicate with each other or with base stations via a wireless communication in order to exchange information (data packets). This technical field can be designated as "car communication".

Due to the speeds of the cars, it is necessary that the information (data packets) can be transmitted between both wireless communication entities with a minimum of processing and propagation delay time. The wireless communication entities may be a communication unit of the moving car and a base station or the communication units of two moving cars that are enabled to communicate with each other over-the-air.

Despite the fact that those communication technologies have to be established, a method and a system are required for determining a delay time that occurs between the communication entities in order to verify and proof the properties of the communication technology applied.

US 2011/0216660 A1 describes that Beacon frames including time stamps are used to synchronize respective wireless nodes within a system.

US 2008/0247352 A1 describes to determine the propagation delay time based on a reference signal coming from a communications management equipment. Based on the propagation delay time determined, a model assigned to the system is shifted.

Accordingly, there is a need for a method for determining a delay time between two wireless communication entities as well as a system for determining such a delay time.
- To address this need, among others, the present invention provides inter alia a method as defined in claim 1.

The two wireless communication entities are configured to communicate with each other over-the-air such that an over-the-air communication channel is established between both communication entities. The delay time of that over-the-air communication channel can be determined appropriately by performing that method. Furthermore, internal delays of the communication entities while processing the data packet can be determined as well. In general, it is ensured that a time stamp of the data packet, for instance an internet protocol packet (IP packet), processed by the first wireless communication entity is provided, namely the first time stamp, by using the hardware clock that has been synchronized with a global navigation satellite system master clock via the global navigation satellite system unit (GNSS unit) previously. While using the global navigation satellite system master clock for synchronization purposes, a global precise timing information is provided that can be used for the precise time stamping since the hardware clock is synchronized appropriately with the GNSS master clock. In addition, the hardware clock interacts with the physical layer of the data packet processed. Thus, a hardware time stamping of the data packet is used ensuring tight synchronization in a system comprising at least both wireless communication entities. Generally spoken, hardware time stamping provides a gain of precision in the range of 100 µs as the timing information is allocated directly to the physical layer of the data packet processed instead of a higher layer which causes additional delay and jitter during the processing. The synchronization(s) of the global navigation satellite system clock and/or the hardware clock take(s) place continuously, in particular iterative in certain time intervals. Providing a time stamp generally means that the timing information can be stamped (inserted) into the data packet, retrieved from the data packet and/or gathered appropriately while the data packet is processed by the unit comprising the hardware clock.

The payload data interfaces as well as the GNSS unit may be integrated in a common device, namely a time stamp device. Accordingly, this time stamp device comprises the hardware clock. The data packet processed by the first wireless communication entity can be initially provided by a data source wherein this data packet is then routed via the time stamp device having both payload data interfaces such that the time stamp device is located within the data routing towards the first communication entity, for instance a base station. Therefore, the time stamp device is connected via both payload data interface units to the (payload) data source as well as the communication entity used for transmitting the data packet to a second wireless communication entity.

Alternatively, the data packet processed by the first wireless communication entity can be initially received while being transmitted from the second wireless communication entity. The data packet received is then routed via the time stamp device having both payload data interfaces such that the time stamp device is located within the data routing towards a data sink. Therefore, the time stamp device is connected via both payload data interface units to the (payload) data sink as well as the communication entity used for receiving the data packet from the second wireless communication entity.

The second time stamp may be determined by using a second time stamp device allocated to a receiving side such that the timing information is retrieved when the data packet is processed on the receiving side. Accordingly, two different time stamps are provided, namely on the transmitting side as well as the receiving side. Generally, the time can be determined precisely when the same data packet is processed by the second communication entity itself or a device allocated thereto, for instance the second time stamp device.

Due to this comparison step of both time stamps, a time difference for the same data packet can be evaluated. The time difference of both time stamps relate to the time required for the wireless communication between both wireless communication entities.

As the time stamps relate to the dedicated times when the data packet has been processed on the transmitting side as well as on the receiving side, the processing and propagation delay time due to the communication between both wireless communication entities can be evaluated appropriately.

Said first time stamp may be stored in a first time stamp log memory and/or said second time stamp may be stored in a second time stamp log memory. The dedicate time stamp device, namely the first or the second one, may comprise the corresponding time stamp log memory. Alternatively, the dedicated time stamp log memory is connected to the corresponding time stamp device via a memory interface. According to another alternative embodiment, both time stamps are stored in a common time stamp log memory.

According to another aspect, said clock synchronization protocol is a precision time protocol. The precision time protocol (PTP) ensures a high precision and accuracy of clock synchronization while using a master-slave system for synchronizing purposes. This means that one of both communication partners used for the clock synchronization protocol is a master which sets the clock of the slave appropriately.

Particularly, the global navigation satellite system clock (GNSS clock) is used as the master clock that sets the hardware clock in the first payload data interface unit appropriately by using the clock synchronization protocol. This ensures that the hardware clock is set precisely and accurately while using the precision time protocol for setting the hardware clock.

Moreover, a time stamp device is provided that comprises:
- a first payload data interface unit, said first payload data interface unit being adapted to communicate payload data from a wireless communication entity and/or payload data to a wireless communication entity, wherein said first payload data interface unit comprises a hardware clock for providing a time stamp;
- a second payload data interface unit, said second payload data interface unit being adapted to communicate payload data from a payload data source and/or payload data to a payload data sink; and
- a global navigation satellite system unit adapted to receive a global navigation satellite system master clock signal, wherein said global navigation satellite system unit comprises a global navigation satellite system clock;
- said time stamp device being configured to synchronize said hardware clock with said global navigation satellite system clock by using a clock synchronization protocol.

Accordingly, a time stamp device is provided that can be used to process data provided by a data source for being transmitted via an allocated communication entity. Alternatively or supplementary, the time stamp device can be used to process data received by the allocated communication entity which data shall be forwarded to a payload data sink for processing the payload data received appropriately. This means that the time stamp device is interposed between the communication entity and the payload data source or the payload data sink depending on its application purpose.

This global navigation satellite system clock is located within the time stamp device and interacts with the global navigation satellite system master clock in order to retrieve overall precise time information.

Further, said global navigation satellite system unit may be configured to synchronize said global navigation satellite system clock with said global navigation satellite system master clock signal. The global navigation satellite system clock can be set by the global navigation satellite system master clock appropriately in order to ensure that the time stamp device is synchronized with the global navigation satellite system master clock.

The hardware clock can be used to provide a time stamp for the data packet processed by the time stamp device. Therefore, the hardware clock interacts with a physical layer of the data packet processed ensuring a high precision and accuracy of the timing information provided by the time stamp as the timing information directly relates to the physical layer instead of any higher layer of the data packet processed. The payload data processed by the time stamp device can be adapted by the first payload data interface unit appropriately while providing the first time stamp to the physical layer of the payload data processed.

Moreover, said time stamp device is configured to synchronize said hardware clock with said global navigation satellite system clock by using a clock synchronization protocol. This ensures that the time stamp provided and the timing information related thereto are precise and accurate due to the global navigation satellite system clock synchronized with the global navigation satellite system master clock via the appropriate signal received.

According to another aspect, said time stamp device is configured to provide a first time stamp of said payload data routed between both payload data interface units by using said hardware clock. As already mentioned, the hardware clock synchronized with the global navigation satellite system master clock ensures that a global time information can be obtained with regard to the processing of the data packet (payload data). Accordingly, the time stamp device is enabled to provide the timing information of that data packet while using or accessing the hardware clock appropriately.

In general, the time stamp device receives the time information from a global navigation satellite system master clock via a dedicated signal which can be processed appropriately in order to provide precise time information for the global navigation satellite system clock. This global navigation satellite system clock interacts with the hardware clock used for hardware time stamping. Particularly, the global navigation satellite system clock synchronizes the hardware clock appropriately with regard to the global navigation satellite system master clock such that a precise and accurate time stamp for the data packet processed by the time stamp device, namely the payload data, is provided. As generally defined, providing a time stamp relates to inserting the corresponding timing information into the data packet, in particular the physical layer of the data packet, retrieving and/or gathering the appropriate timing information (from the data packet), in particular while accessing the hardware clock.

Particularly, said time stamp device is configured to store said first time stamp in at least one of a time stamp log memory, an external memory communicating with said time stamp device via a time stamp communication interface, and another time stamp device processing said payload data. Accordingly, the first time stamp can be used for further processing, for instance for comparing the first time stamp with another time stamp provided. Using the first time stamp and another time stamp may give information with regard to a processing and propagation delay time between both wireless communication entities. The time stamp provided may be retrieved directly and stored. Alternatively, the time stamp is generated and inserted into the data packet processed such that the time stamp is retrieved later, in particular on the reception side by using another time stamp device having an appropriate time stamp log memory.

Moreover, said global navigation satellite system unit may further comprise at least one of a receiver, a peripheral component interconnect express card, and a processing unit. The receiver may be a Global Positioning System receiver (GPS receiver), a Global Navigation Satellite System receiver (Glonass receiver) or a receiver for Galileo or Beidou GNSS data. The receiver is used in combination with an antenna that communicates with a satellite (system) for receiving accurate and precise time information from the global navigation satellite system master clock being valid overall. The peripheral component interconnect express card (PCIe card) may be connected to the receiver via the processing unit such that the time information (signal) received via the receiver is processed and converted appropriately such that the PCIe card may communicate with the first payload data interface unit in order to exchange synchronization signals via the clock synchronization protocol appropriately, for instance the precision time protocol (PTP).

Furthermore, the invention provides a system as defined in claim 4.

Accordingly, it is ensured that the payload data can be provided with the first time stamp accurately and precisely, in particular the physical layer of that payload data interacting with the hardware clock. The payload data is provided with the first time stamp while being processed by the time stamp device that is interposed between the payload data sink or the payload data source and the allocated wireless communication entity.

Thus, the second time stamp device is also configured to provide a time stamp for the data packet processed by the dedicated time stamp device such that two different time stamps of the same data packet are provided while being processed by the corresponding time stamp devices. For instance, the first time stamp device may be allocated to a transmission side as the first wireless communication entity is used for transmitting the payload data appropriately. Thus, the second time stamp device may be allocated to the reception side of the system as the second wireless communication entity allocated to the second time stamp device is used for receiving the payload data being initially transmitted by the first communication entity. As both time stamp devices are synchronized with the global navigation satellite system master clock and the dedicated hardware clocks are synchronized appropriately, for instance via clock synchronization signals using a suitable protocol such as PTP, the time stamps provided can be used to retrieve accurate and precise data regarding a time difference occurred.

Accordingly, both time stamps are compared in order to determine a delay time. The delay time comprises processing and propagation delay time of both communication entities as well as the wireless communication established there between, namely between both wireless communication entities. The system is enabled to precisely and accurately determine the whole delay time that occurs between both communication entities while communicating with each other. This is inter alia ensured by using the hardware clocks allocated to the payload data interfaces that are connected to the communication entities directly.

Each of the hardware clocks directly interacts with the physical layer of the payload data such that precise timing information can be ensured when providing the corresponding time stamp.

As both hardware clocks are globally synchronized, the time stamps provided by both time stamp devices can be compared in a reliable manner.

Furthermore, at least one of said time stamp devices may be configured as a time stamp device described above. The advantages and properties of the time stamp device mentioned above also apply to the time stamp device(s) of the system.

The foregoing aspects and many of the attendant advantages of the claimed subject matter will become more readily appreciated as the same become better understood by reference to the following detailed description, when taken in conjunction with the accompanying drawings, wherein:
- Figure 1 shows a schematic overview of one representative embodiment of a system according to the invention using two time stamp devices; and
- Figure 2 shows a schematic overview of another representative embodiment of a system according to the invention.

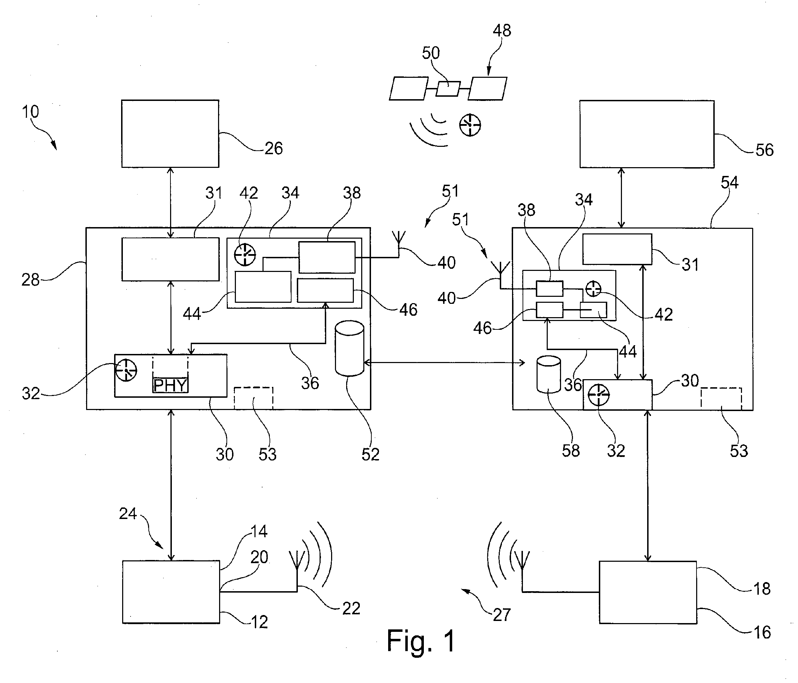

In Figure 1, a system 10 for determining a delay time between two wireless communication entities is shown that comprises a first wireless communication entity 12 formed by a base station 14 as well as a second wireless communication entity 16 established by a user equipment 18, for instance a mobile device such as a mobile phone, smartphone or similar devices.

The first wireless communication entity 12 comprises a first interface 20 that is connected to an antenna 22 for transmitting and/or receiving electromagnetic signals. Further, the first wireless communication entity 12 comprises a second interface 24 that is used for transmitting data to a payload data sink and/or receiving from a payload data source.

In the shown embodiment, the first wireless communication entity 12 is connected to a payload data source 26 via its second interface 24. Thus, the first wireless communication entity 12 receives payload data from the payload data source 26 that is transmitted via the antenna 22 to the second wireless communication entity 16 via an over-the-air communication channel 27 established between both wireless communication entities 12, 16.

As shown, a first time stamp device 28 is interconnected between the first wireless communication entity 12 and the payload data source 26 such that the payload data provided by the payload data source 26 is routed through the first time stamp device 28 having a first payload data interface unit 30 as well as a second payload data interface unit 31 that is connected to the payload data source 26. Accordingly, the first payload data interface unit 30 is connected to the second interface 24 of the first wireless communication entity 12.

As shown in Figure 1, the first payload data interface unit 30 comprises a hardware clock 32 that is used to provide a time stamp of the payload data processed by the time stamp device 28, in particular the first payload data interface unit 30.

In order to provide a precise and accurate time stamp, the time stamp device 28 further comprises a global navigation satellite system unit 34 (GNSS unit). The GNSS unit 34 is connected to the first payload data interface unit 30 via a communication line 36 as will be described later.

The GNSS unit 34 comprises in the shown embodiment, a global navigation satellite system receiver 38, for instance a GPS, Glonass, Galileo or Beidou receiver, that is allocated to an antenna 40, a GNSS clock 42, a processing unit 44, and a peripheral component interconnect express card 46 (PCIe card).

In general, the GNSS unit 34 is configured to communicate with a GNSS master clock 48 provided by a satellite (system) 50 via the antenna 40. The global navigation satellite system master clock 48 communicates with the antenna 40 that is part of a global navigation satellite system interface 51 of the GNSS unit 34. Thus, the GNSS clock 42 can be synchronized with the GNSS master clock 48 via this GNSS interface appropriately.

Further, the GNSS unit 34 is configured to synchronize the hardware clock 32 of the first payload data interface unit 30 via the communication line 36 that is used for a bidirectional communication between the GNSS unit 34 and the first payload data interface unit 30 while using a clock synchronization protocol, for instance a precision time protocol (PTP).

Accordingly, the hardware clock 32 is synchronized with the GNSS master clock 48 via the GNSS unit 34 of the first time stamp device 28 such that a physical layer of the payload data processed by the first time stamp device 28 interacts with the hardware clock 32 in order to provide a precise and accurate timing information as additional delay and jitter do not occur in contrast to providing timing information of a higher layer of the data packet than the hardware layer.

Furthermore, the first time stamp device 28 is configured to provide a first time stamp of the payload data processed by the first time stamp device 28, in particular the first payload data interface unit 30, while taking the hardware clock 32 into account that has been synchronized with the GNSS master clock 48.

The accuracy and the precision are further improved as the first payload data interface unit 30 having the hardware clock 32 is directly connected to the first communication entity 12 processing the payload data appropriately.

As the hardware clock 32 is provided with the time information received by the GNSS master clock 48, a global setting of the hardware clock 32 is ensured such that the hardware clock 32 and the first time stamp provided by using the hardware clock 32 can be used for comparison purposes with other time stamps provided in a similar manner.

The first time stamp may be stored in a time stamp log memory 52 that is integrated in the first time stamp device 28. Alternatively, the first time stamp device 28 may comprise a time stamp communication interface 53 that communicates with an external memory that is used for storing the first time stamp.

In addition to the first wireless communication entity 12, the second wireless communication entity 16 is also allocated to a second time stamp device 54 that is configured in a similar manner as the first time stamp device 28, in particular both time stamp devices 28, 54 are exchangeable with each other.

As shown in Figure 1, the second time stamp device 54 is interconnected between the second wireless communication entity 16 and a payload data sink 56 such that the second wireless communication entity 16 receives the data packets transmitted via the over-the-air communication channel 27. The payload data received via the second wireless communication entity 16 is forwarded to the payload data sink 56 in order to be processed appropriately.

Furthermore, a second time stamp log memory 58 is allocated to the second time stamp device 54 in order to (at least temporarily) store a second time stamp provided by means of the second time stamp device 54 as described for the first time stamp device 28.

Alternatively, the second time stamp device 54 may also have a time stamp communication interface 53 interacting with an external memory.

According to another alternative embodiment, the first and second time stamp log memories 52, 58 are formed integrally such that a single time stamp log memory is provided used for storing both time stamps.

Moreover, the first time stamp device 28 may generate and insert the first time stamp into the payload data which is retrieved from the payload data while being processed by the second time stamp device 54 that provides the second time stamp (simultaneously).

Irrespective of these alternative embodiments, a first time stamp is provided by the hardware clock 32 of the first time stamp device 28 that provides precise and accurate timing information about the processing time of the data packet by the first payload data interface unit 30 wherein a second time stamp is provided by the hardware clock 32 of the second time stamp device 54 that provides precise and accurate timing information about the processing of the data packet by the first payload data interface 30 unit of the second time stamp device 54.

In general, both time stamp devices 28, 54 may communicate with each other in order to compare the time stamps provided, in particular stored in the dedicated time stamp log memories 52, 58. Hence, the system 10 is configured to evaluate the time difference of both time stamps in order to determine a processing and propagation delay time of the signal transmission that is related to the delay time of the over-the-air communication channel 27 as well as internal delays of both communication entities 12, 16.

The payload data source 26 provides payload data that is processed by the first time stamp device 28 being connected to the payload data source 26 such that a time stamp of the payload data processed is provided wherein a hardware clock 32 is used in order to get a precise and accurate timing information of the payload data processed. For this purpose, the hardware clock 32 is synchronized with the global navigation satellite system master clock 48 by using the global navigation satellite system unit 34 appropriately.

The payload data is further forwarded to the first wireless communication entity 12 such that the payload data is transmitted via the antenna 22 in order to be received by the second wireless communication entity 16.

In general, the time stamp of the payload data processed by the first time stamp device 28 is provided while being forwarded to the first wireless communication entity 12.

The payload data transmitted by the first wireless communication entity 12 is received by the second wireless communication entity 16 and forwarded to the second time stamp device 54 in order to provide the second time stamp on the receiving side of the system 10.

Hence, two different time stamps of the same payload data used within the system 10 are provided which can be compared appropriately as the hardware clocks 32 of both time stamp devices 28, 54 are synchronized in the same manner as it was described for the first time stamp device 28.

As described, a time stamp is provided each on the transmitting and receiving side such that the time stamps can be compared in order to determine a processing and propagation delay time that occurs due to the internal processing within the wireless communication entities 12, 16 and the over-the-air communication channel 27 established between both wireless communication entities 12, 16.

Since both hardware clocks 32 of the time stamp devices 28, 54 are synchronized with the (same) global navigation satellite system master clock 48, it is ensured that both time stamps can be compared in order to determine the delay time in an accurate and precise manner.

In general, the first and the second wireless communication entity 12, 16 can be used vice versa which means that the first communication entity 12 may be configured to receive payload data whereas the second wireless communication entity 16 may be configured to transmit payload data to the first communication entity 12. Accordingly, the first wireless communication entity 12 may be connected to a payload data sink via the first time stamp device 28 whereas the second wireless communication entity 16 is connected to a payload data source via the second time stamp device 54. Thus, the transfer of payload data is inverted with respect to the aforementioned procedure.

Accordingly, the delay time can be determined for a bidirectional communication system 10.

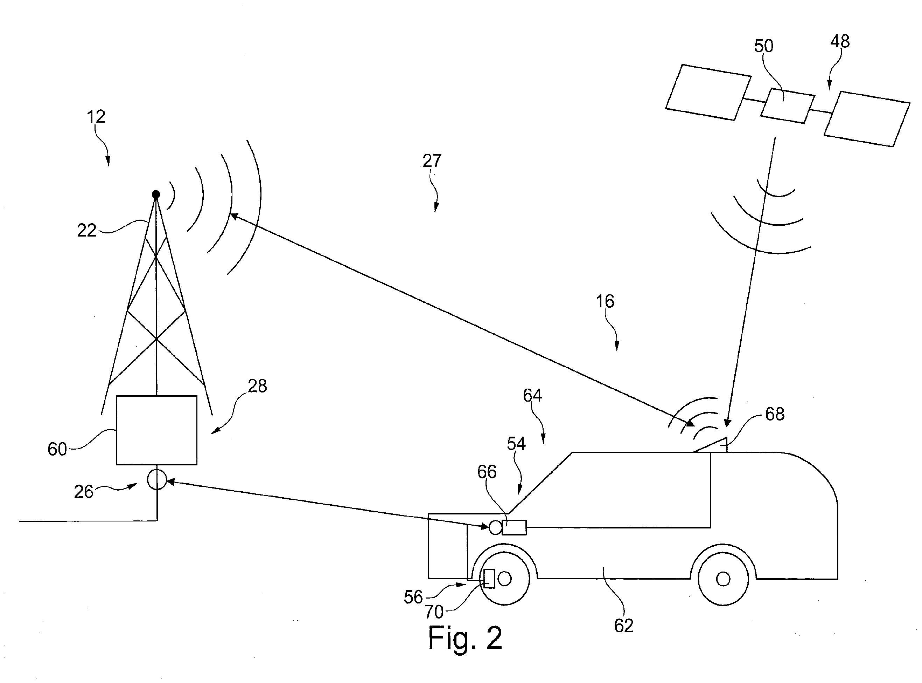

In Figure 2, a second embodiment of the system 10 is shown wherein the first wireless communication entity 12 is provided by a base station 60 that communicates with the second wireless communication entity 16 being established within a moving car 62, in particular by a communication unit 64 of the moving car 62 such as a modem 66 connected to an appropriate antenna 68, for instance a GPS antenna. The modem 66 and the antenna 68 are part of the second wireless communication entity 16.

The moving car 62 comprises a braking system 70 that is connected to the second wireless communication entity 16 such that the first wireless communication entity 12 is configured to control the braking system 70 appropriately while transmitting and/or receiving data packets. Accordingly, an automatically controlled braking system may be provided that can be used by a car configured for (at least partly) autonomous driving, for instance.

As already described with respect to Figure 1, the system 10 ensures that the processing and propagation delay time between the communication of the first wireless communication entity 12 and the second wireless communication entity 16 can be determined easily while synchronizing both hardware clocks of the time stamp devices 28, 54 allocated to the corresponding wireless communication entity 12, 16 with the global navigation satellite system master clock 48.

The time stamp devices 28, 54 may generally be established by time stamp units integrated into certain devices, in particular integrated permanently.

For instance, the base station 60 comprises the data source 26 whereas the braking system 70 corresponds to the data sink 56 that receives the data transmitted and processes the information related thereto appropriately.

Accordingly, the system 10 enables the possibility to determine the processing and propagation delay time occurred between the base station 60 and the moving car 62 while controlling the moving car 62, for instance the braking system 70 of the moving car 62.

Alternatively, both wireless communication entities 12, 16 may be provided by two moving cars communicating with each other.

Generally, the system 10 is enabled to test and verify a communication connection between corresponding wireless communication entities 12, 16 in an appropriate manner, in particular to determine a delay time of the communication which relates to a processing and propagation delay time.

## Claims

1. A method for determining a delay time between two wireless communication entities (12, 16), the method comprising the following steps:
- Synchronizing a global navigation satellite system clock (42) of a global navigation satellite system unit (34) with a global navigation satellite system master clock (48), wherein a first time stamp device (28), having said global navigation satellite system unit (34), a first payload data interface unit (30) as well as a second payload data interface unit (31), is connected to a first wireless communication entity (12) such that said global navigation satellite system unit (34) is allocated to said first wireless communication entity (12);
- Synchronizing said global navigation satellite system clock (42) with a hardware clock (32) in said first payload data interface unit (30) by using a clock synchronization protocol;
- Synchronizing a global navigation satellite system clock (42) of a global navigation satellite system unit (34) with a global navigation satellite system master clock (48), wherein a second time stamp device (54), having said global navigation satellite system unit (34), a first payload data interface unit (30) as well as a second payload data interface unit (31), is connected to a second communication entity (16) such that said global navigation satellite system unit (34) is allocated to said second wireless communication entity (16);
- Synchronizing said global navigation satellite system clock (42) with a hardware clock (32) in said first payload data interface unit (30) by using a clock synchronization protocol;
- Routing in said first time stamp device (28) at least one data packet relating to payload data from said second payload data interface unit (31) to said first payload data interface unit (30);
- Providing a first time stamp of said data packet by using said hardware clock (32) when processed by said first time stamp device (28), thereby hardware time stamping of said data packet, wherein the timing information is stamped into the data packet;
- Transmitting said data packet by means of said first wireless communication entity (12);
- Receiving said data packet by means of said second wireless communication entity (16);
- Providing a second time stamp by using said second time stamp device (54) allocated to a receiving side, thereby hardware time stamping of said data packet processed by said second time stamp device (54), wherein said second time stamp relates to said data packet while being processed by said second time stamp device (54); and
- Comparing said first and said second time stamps with each other, wherein a processing and propagation delay time is determined based on the result of said comparison.

2. The method according to claim 1, wherein said first time stamp is stored in a first time stamp log memory (52).

3. The method according to claim 1 or 2, wherein said second time stamp is stored in a second time stamp log memory (58).

4. A system (10) for determining a delay time between two wireless communication entities (12, 16), comprising:
- a first wireless communication entity (12);
- a second wireless communication entity (16);
- a first time stamp device (28);
- a second time stamp device (54);
- a payload data sink (56); and
- a payload data source (26), wherein
said first time stamp device (28) is interconnected between said first communication entity (12) and said payload data source (26), said first time stamp device (28) being configured to receive a global navigation satellite system master clock signal via a global navigation satellite system interface (51) and to synchronize a first hardware clock (32) with said global navigation satellite system master clock (48);
said first time stamp device (28) being further configured to provide a first time stamp of a data packet provided by said payload data source (26) and processed by said first time stamp device (28) by using said hardware clock (32) synchronized with said global navigation satellite system master clock (48), thereby hardware time stamping of said data packet, wherein the timing information is stamped into the data packet, wherein said first wireless communication entity (12) is configured to transmit said data packet to said second communication entity (16),
wherein said second communication entity (16) is configured to forward said data packet received to said second time stamp device (54), said second time stamp device (54) being interconnected between said second wireless communication entity (16) and said payload data sink (56),
said second time stamp device (54) being configured to receive a global navigation satellite system master clock signal via a global navigation satellite system interface (51) and to synchronize a second hardware clock (32) with said global navigation satellite system master clock (48);
said second time stamp device (54) being further configured to provide a second time stamp of said data packet received by said second wireless communication entity (16) and processed by said second time stamp device (54) by using said hardware clock (32) synchronized with said global navigation satellite system master clock (48), thereby hardware time stamping of said data packet; and
wherein the system (10) is configured to compare both time stamps with each other, wherein a processing and propagation delay time is determined based on the result of said comparison.

## Patentansprüche

1. Verfahren zum Bestimmen einer Verzögerungszeit zwischen zwei drahtlosen Kommunikationsentitäten (12, 16), das Verfahren umfassend die folgenden Schritte:
- Synchronisieren einer globalen Navigationssatellitensystemuhr (42) einer globalen Navigationssatellitensystemeinheit (34) mit einer globalen Navigationssatellitensystemmasteruhr (48), wobei eine erste Zeitstempelvorrichtung (28), die die globale Navigationssatellitensystemeinheit (34), eine erste Nutzlastdatenschnittstelleneinheit (30) sowie eine zweite Nutzlastdatenschnittstelleneinheit (31) aufweist, mit einer ersten drahtlosen Kommunikationsentität (12) derart verbunden ist, dass die globale Navigationssatellitensystemeinheit (34) der ersten drahtlosen Kommunikationsentität (12) zugeordnet ist;
- Synchronisieren der globalen Navigationssatellitensystemuhr (42) mit einer Hardwareuhr (32) in der ersten Nutzlastdatenschnittstelleneinheit (30) durch Verwenden eines Uhrsynchronisationsprotokolls;
- Synchronisieren einer globalen Navigationssatellitensystemuhr (42) einer globalen Navigationssatellitensystemeinheit (34) mit einer globalen Navigationssatellitensystemhauptuhr (48), wobei eine zweite Zeitstempelvorrichtung (54), die die globale Navigationssatellitensystemeinheit (34), eine erste Nutzlastdatenschnittstelleneinheit (30) sowie eine zweite Nutzlastdatenschnittstelleneinheit (31) aufweist, mit einer zweiten Kommunikationsentität (16) derart verbunden ist, dass die globale Navigationssatellitensystemeinheit (34) der zweiten drahtlosen Kommunikationsentität (16) zugeordnet ist;
- Synchronisieren der globalen Navigationssatellitensystemuhr (42) mit einer Hardwareuhr (32) in der ersten Nutzlastdatenschnittstelleneinheit (30) durch Verwenden eines Uhrsynchronisationsprotokolls;
- Leiten, in der ersten Zeitstempelvorrichtung (28), mindestens eines Datenpakets, das sich auf Nutzlastdaten bezieht, von der zweiten Nutzlastdatenschnittstelleneinheit (31) zu der ersten Nutzlastdatenschnittstelleneinheit (30);
- Bereitstellen eines ersten Zeitstempels des Datenpakets durch Verwenden der Hardwareuhr (32), wenn er durch die erste Zeitstempelvorrichtung (28) verarbeitet wird, dadurch Hardwarezeitstempeln des Datenpakets, wobei die Zeitinformationen in das Datenpaket gestempelt werden;
- Übertragen des Datenpakets mittels der ersten drahtlosen Kommunikationsentität (12);
- Empfangen des Datenpakets mittels der zweiten drahtlosen Kommunikationsentität (16);
- Bereitstellen eines zweiten Zeitstempels durch Verwenden der zweiten Zeitstempelvorrichtung (54), die einer Empfangsseite zugeordnet ist, dadurch Hardwarezeitstempeln des Datenpakets, das durch die zweite Zeitstempelvorrichtung (54) verarbeitet wird, wobei sich der zweite Zeitstempel auf das Datenpaket bezieht, während er durch die zweite Zeitstempelvorrichtung (54) verarbeitet wird; und
- Vergleichen des ersten und des zweiten Zeitstempels miteinander, wobei eine Verarbeitungs- und Ausbreitungsverzögerungszeit basierend auf dem Ergebnis des Vergleichs bestimmt wird.

2. Verfahren nach Anspruch 1, wobei der erste Zeitstempel in einem ersten Zeitstempelprotokollspeicher (52) gespeichert ist.

3. Verfahren nach Anspruch 1 oder 2, wobei der zweite Zeitstempel in einem zweiten Zeitstempelprotokollspeicher (58) gespeichert ist.

4. System (10) zum Bestimmen einer Verzögerungszeit zwischen zwei drahtlosen Kommunikationsentitäten (12, 16), umfassend:
- eine erste drahtlose Kommunikationsentität (12);
- eine zweite drahtlose Kommunikationsentität (16);
- eine erste Zeitstempelvorrichtung (28);
- eine zweite Zeitstempelvorrichtung (54);
- eine Nutzlastdatensenke (56); und
- eine Nutzlastdatenquelle (26), wobei
die erste Zeitstempelvorrichtung (28) zwischen der ersten Kommunikationsentität (12) und der Nutzlastdatenquelle (26) verbunden ist, wobei die erste Zeitstempelvorrichtung (28) konfiguriert ist, um ein globales Navigationssatellitensystemhauptuhrsignal über eine globale Navigationssatellitensystemschnittstelle (51) zu empfangen und um eine ersten Hardwareuhr (32) mit der globalen Navigationssatellitensystemhauptuhr (48) zu synchronisieren;
wobei die erste Zeitstempelvorrichtung (28) ferner konfiguriert ist, um einen ersten Zeitstempel eines Datenpakets bereitzustellen, das durch die Nutzlastdatenquelle (26) bereitgestellt und durch die erste Zeitstempelvorrichtung (28) verarbeitet wird, durch Verwenden der Hardwareuhr (32), die mit der globalen Navigationssatellitensystemhauptuhr (48) synchronisiert ist, dadurch Hardwarezeitstempeln des Datenpakets, wobei die Zeitinformationen in das Datenpaket gestempelt werden, wobei die erste drahtlose Kommunikationsentität (12) konfiguriert ist, um das Datenpaket an die zweite Kommunikationsentität (16) zu übertragen,
wobei die zweite Kommunikationsentität (16) konfiguriert ist, um das Datenpaket weiterzuleiten, das an der zweite Zeitstempelvorrichtung (54) empfangen wird, wobei die zweite Zeitstempelvorrichtung (54) zwischen der zweiten drahtlosen Kommunikationsentität (16) und der Nutzlastdatensenke (56) verbunden ist,
wobei die zweite Zeitstempelvorrichtung (54) konfiguriert ist, um ein globales Navigationssatellitensystemhauptuhrsignal über eine globale Navigationssatellitensystemschnittstelle (51) zu empfangen und eine zweite Hardwareuhr (32) mit der globalen Navigationssatellitensystemhauptuhr (48) zu synchronisieren;
wobei die zweite Zeitstempelvorrichtung (54) ferner konfiguriert ist, um einen zweiten Zeitstempel des Datenpakets bereitzustellen, der durch die zweite drahtlose Kommunikationsentität (16) empfangen und durch die zweite Zeitstempelvorrichtung (54) verarbeitet wird, durch Verwenden der Hardwareuhr (32), die mit der globalen Navigationssatellitensystemhauptuhr (48) synchronisiert ist, dadurch Hardwarezeitstempeln des Datenpakets; und
wobei das System (10) konfiguriert ist, um beide Zeitstempel miteinander zu vergleichen, wobei eine Verarbeitungs- und Ausbreitungsverzögerungszeit basierend auf dem Ergebnis des Vergleichs bestimmt wird.

## Revendications

1. Procédé de détermination d'un temps de retard entre deux entités de communication sans fil (12, 16), le procédé comprenant les étapes suivantes :
- La synchronisation d'une horloge de système mondial de navigation par satellite (42) d'une unité de système mondial de navigation par satellite (34) avec une horloge maîtresse de système mondial de navigation par satellite (48), dans lequel un premier dispositif d'horodatage (28), ayant ladite unité de système mondial de navigation par satellite (34), une première unité d'interface de données de charge utile (30) ainsi qu'une seconde unité d'interface de données de charge utile (31), est connecté à une première entité de communication sans fil (12) de telle sorte que ladite unité de système mondial de navigation par satellite (34) est attribuée à ladite première entité de communication sans fil (12) ;
- La synchronisation de l'horloge du système mondial de navigation par satellite (42) avec une horloge matérielle (32) dans ladite première unité d'interface de données de charge utile (30) à l'aide d'un protocole de synchronisation d'horloge ;
- La synchronisation d'une horloge de système mondial de navigation par satellite (42) d'une unité de système mondial de navigation par satellite (34) avec une horloge maîtresse de système mondial de navigation par satellite (48), dans lequel un second dispositif d'horodatage (54), ayant ladite unité de système mondial de navigation par satellite (34), une première unité d'interface de données de charge utile (30) ainsi qu'une seconde unité d'interface de données de charge utile (31), est connecté à une seconde entité de communication (16) de telle sorte que ladite unité de système mondial de navigation par satellite (34) est attribuée à ladite seconde entité de communication sans fil (16) ;
- La synchronisation de l'horloge du système mondial de navigation par satellite (42) avec une horloge matérielle (32) dans ladite première unité d'interface de données de charge utile (30) à l'aide d'un protocole de synchronisation d'horloge ;
- Le routage dans ledit premier dispositif d'horodatage (28) d'au moins un paquet de données relatives aux données utiles depuis ladite seconde unité d'interface de données utiles (31) vers ladite première unité d'interface de données utiles (30) ;
- La fourniture d'un premier horodatage dudit paquet de données à l'aide de ladite horloge matérielle (32) lorsqu'elle est traitée par ledit premier dispositif d'horodatage (28), ce qui permet l'horodatage matériel dudit paquet de données, dans lequel les informations d'horodatage sont estampées dans le paquet de données ;
- La transmission dudit paquet de données au moyen de ladite première entité de communication sans fil (12) ;
- La réception dudit paquet de données au moyen de ladite seconde entité de communication sans fil (16) ;
- La fourniture d'un second horodatage à l'aide dudit second dispositif d'horodatage (54) attribué à un côté de réception, permettant ainsi un horodatage matériel dudit paquet de données traité par ledit second dispositif d'horodatage (54), dans lequel ledit second horodatage se rapporte audit paquet de données en cours de traitement par ledit second dispositif d'horodatage (54) ; et
- La comparaison entre ledit premier et ledit second horodatage, dans lequel un temps de traitement et de propagation est déterminé sur la base du résultat de ladite comparaison.

2. Procédé selon la revendication 1, dans lequel ledit premier horodatage est stocké dans une première mémoire de journal d'horodatage (52).

3. Procédé selon la revendication 1 ou 2, dans lequel ledit second horodatage est stocké dans une seconde mémoire de journal d'horodatage (58).

4. Système (10) de détermination d'un temps de retard entre deux entités de communication sans fil (12, 16), comprenant :
- une première entité de communication sans fil (12) ;
- une seconde entité de communication sans fil (16) ;
- un premier dispositif d'horodatage (28) ;
- un second dispositif d'horodatage (54) ;
- un collecteur de données de charge utile (56) ; et
- une source de données utiles (26), dans lequel
ledit premier dispositif d'horodatage (28) est interconnecté entre ladite première entité de communication (12) et ladite source de données de charge utile (26), ledit premier dispositif d'horodatage (28) étant configuré pour recevoir un signal d'horloge maîtresse de système mondial de navigation par satellite par l'intermédiaire d'une interface de système mondial de navigation par satellite (51) et pour synchroniser une première horloge matérielle (32) avec ladite horloge maîtresse de système mondial de navigation par satellite (48) ;
ledit premier dispositif d'horodatage (28) étant en outre configuré pour fournir un premier horodatage d'un paquet de données fourni par ladite source de données utiles (26) et traité par ledit premier dispositif d'horodatage (28) à l'aide de ladite horloge matérielle (32) synchronisée avec ladite horloge maîtresse de système mondial de navigation par satellite (48), permettant ainsi l'horodatage matériel dudit paquet de données, dans lequel les informations de synchronisation sont estampées dans le paquet de données, dans lequel ladite première entité de communication sans fil (12) est configurée pour transmettre ledit paquet de données à ladite seconde entité de communication (16),
dans lequel ladite seconde entité de communication (16) est configurée pour acheminer ledit paquet de données reçu audit second dispositif d'horodatage (54), ledit second dispositif d'horodatage (54) étant interconnecté entre ladite seconde entité de communication sans fil (16) et ledit collecteur de données de charge utile (56),
ledit second dispositif d'horodatage (54) étant configuré pour recevoir un signal d'horloge maîtresse de système mondial de navigation par satellite par l'intermédiaire d'une interface de système mondial de navigation par satellite (51) et pour synchroniser une seconde horloge matérielle (32) avec ladite horloge maîtresse de système mondial de navigation par satellite (48) ;
ledit second dispositif d'horodatage (54) étant en outre configuré pour fournir un second horodatage dudit paquet de données reçu par ladite seconde entité de communication sans fil (16) et traité par ledit second dispositif d'horodatage (54) à l'aide de ladite horloge matérielle (32) synchronisée avec ladite horloge maîtresse de système mondial de navigation par satellite (48), permettant ainsi un horodatage matériel dudit paquet de données ; et
dans lequel le système (10) est configuré pour comparer les deux horodatages l'un avec l'autre, dans lequel un temps de retard de traitement et de propagation est déterminé sur la base du résultat de ladite comparaison.
